# EUROPEAN PATENT SPECIFICATION

(11) **EP 0 998 142 B1**
(45) Date of publication and mention of the grant of the patent: **28.12.2011**
(21) Application number: 99121428.9
(22) Date of filing: 27.10.1999
(51) Int. Cl.: H04N 5/445

(54) **Method and apparatus for selecting items in an on-screen menu**
Verfahren und Vorrichtung zum Auswählen von Elementen aus einem auf einem Bildschirm angezeigten Menü
Procédé et dispositif de sélection d'éléments dans un menu affiché sur un écran

(30) Priority: 27.10.1998 KR 9845005
(43) Date of publication of application: 03.05.2000
(60) Divisional application: 10012223.3
(73) Proprietor: SAMSUNG ELECTRONICS CO., LTD., Suwon-City, Kyungki-do (KR)
(72) Inventor: Kim, Phil-tae, Seodaemun-gu, Seoul (KR)
(74) Representative: Grünecker, Kinkeldey, Stockmair & Schwanhäusser

(56) References cited:
- PATENT ABSTRACTS OF JAPAN vol. 018, no. 166 (P-1713), 18 March 1994 (1994-03-18) & JP 05 333840 A (SONY), 17 December 1993 (1993-12-17)
- PATENT ABSTRACTS OF JAPAN vol. 1995, no. 09, 31 October 1995 (1995-10-31) -& JP 07 152490 A (SANYO ELECTRIC), 16 June 1995 (1995-06-16)

## Description

The present invention relates to a method and apparatus for selecting items in an on-screen menu.

On-screen menus are used in several fields and are in particular known from television and video apparatus. The use of on-screen menus usually is very convenient as it allows for selecting items in a user-friendly and easy-to-learn way even if the on-screen menu includes a high number of menu items.

There exist different kinds of on-screen menus including those which are hierarchically organized. Hierarchically organized menus are multi-level menus in which sub-menus exist which are activated upon selecting an item of the main menu. Sub-menus may again have further sub-menus.

Another kind of on-screen menus exist which do not involve multiple levels but which nevertheless include multiple menus. One example of such menus are one-dimensional menus in which the items of one and the same menu are located in one direction whereas different menus are located in another direction.

In the prior art, operation on on-screen menus has often become cumbersome with the increasing number of menus since the menu selecting time necessary for moving an on-screen pointer between icons of different menus or menu levels has increased significantly.

JP-A-07 152 490 relates to speedily moving a cursor to the required item area and speedily selecting the items in a window by deciding the cursor moving direction by a line segment which connects two pointer positions where the cursor goes outside the item area. The line segment is extended in the direction of the cursor movement and the other item area which comes first is decided as the objective area. When no objective area comes even when the line segment is extended in the direction of the cursor movement, the angle made by the line segment extended in the direction of the cursor movement and the plural item areas is under the prescribed value and the smallest then the item area is decided as the objective area. Thus, a pointer can be moved at high speed between an item area and the required objective area and the selection of items can be speedily performed.

According to JP-A-05 333 840, the selection of an icon is facilitated by rapidly moving a cursor to the position of an operation menu and moving the cursor finally in the operation menu. The cursor movement is controlled so that the moving speed of the cursor becomes, e.g., by 1/2, when the cursor is moved into the operation menu. The controlling of the cursor movement includes judging whether the cursor is located in a predetermined field, e.g., an actuation menu. The passing speed of the cursor within an actuation menu is set to one half of the passing speed outside an actuation menu. The described technique can be applied in image display devices such as a personal computer and a television receiver.

It is therefore the object of the present invention to provide an on-screen menu selecting method and apparatus by which the menu selecting time is shortened.

This object is solved by the invention as claimed in claims 1 and 4.

Preferred embodiments of the present invention are defined in the dependent claims.

The invention will become more apparent by describing in detail preferred embodiments thereof with reference to the attached drawings in which:
FIG. 1 is an exterior view of a remote controller for high definition televisions (HDTV);
FIG. 2 is a view illustrating a multi-level on-screen menu;
FIG. 3 is a flowchart illustrating a method of selecting an item in an on-screen menu of multi levels, according to the present invention;
FIG. 4 is a flowchart illustrating a method of selecting an item in an on-screen menu, according to another embodiment of the present invention; and
FIG. 5 is a block diagram of an on-screen menu selecting apparatus according to the present invention.

A preferred embodiment of the present invention takes as concrete examples a remote controller and a remote controller for high-definition television (HDTV) receivers which operates according to an on-screen menu system.

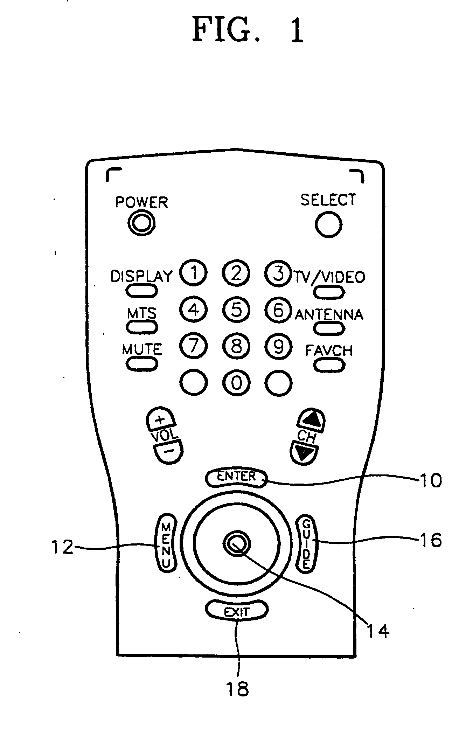

Referring to FIG. 1 showing the exterior of a remote controller for HDTVs, reference numeral 10 denotes an enter key, reference numeral 12 denotes a menu key, reference numeral 14 denotes an I-point control key, reference numeral 16 denotes a guide key, and reference numeral 18 is an exit key.

The enter key 10 is used to select an item displayed on an on-screen menu, and the menu key 12 is used to display an on-screen menu or to exit from a previous menu.

The I-point control key 14 operates like a joystick, and provides controls so that an on-screen pointer moves in left, right, upward and downward directions. An icon pointed by the on-screen pointer can be distinguished from the other icons by changing its color to a predetermined color.

The guide key 16 represents an on-screen program guide for HDTV receivers, and the exit key 18 is used to exit from the on-screen menu.

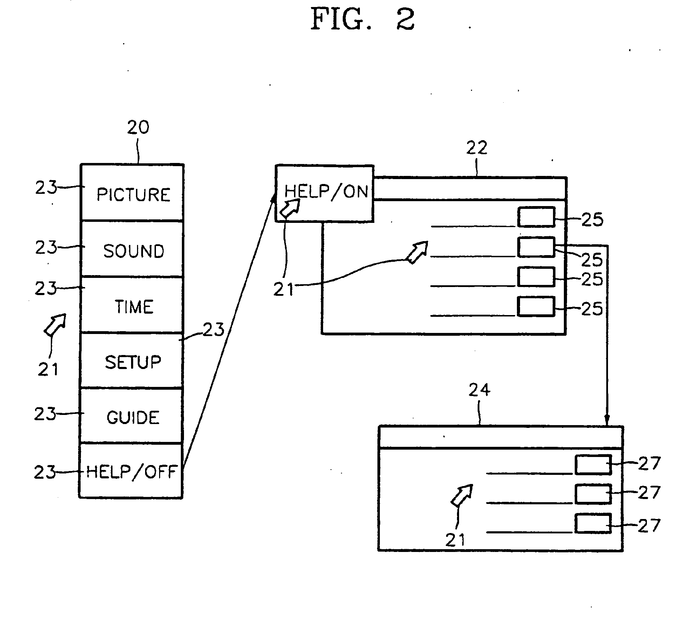

Referring to FIG. 2 showing an on-screen menu, reference numerals 20, 22 and 24 denote first, second and third level menus, respectively, reference numeral 21 denotes an on-screen pointer which is controlled by the I-point control key 14, and reference numerals 23, 25 and 27 denote icons. Here, continuous display of the first level menu, the second level menu and the third level menu is called a multi-level menu. However, besides the case in which a multi-level menu is displayed, there is another case in which a separate menu screen is one-dimensionally displayed on one screen, which is not shown in the drawing.

A method of selecting an on-screen help function is taken as an example to describe the mutual operation between the remote controller of FIG. 1 and the on-screen menu of FIG. 2, which will now be described.

First, when the menu key 12 is depressed on the remote controller, the first level menu 20 shown in FIG. 2 is displayed on a screen. The on-screen pointer 21 is moved upward and downward by the control of the I-point control key 14, so that it is placed on the "Help/off" icon. Then, the enter key 10 is pressed, and the "help/off' is then changed to "help/on" and simultaneously the second level menu 22 appears.

The on-screen pointer 21 is moved to a desired icon of the icons 25 using the I-point controller 14 in the same method, and the enter key 10 is then pressed. At this time, the third level menu 24 is displayed on the screen.

In this way, the enter key 10 installed on the remote controller, is a sort of a key issuing a selection completion command, and acts as an enter key which is used in computers.

In a conventional on-screen menu selection method, the speed of an on-screen pointer which moves between icons of the same level is kept consistent with that of an on-screen pointer which moves between icons of different levels, thereby selecting a desired menu screen. That is, in the prior art, the speed of movement of a pointer between icons of the same level is kept equal to that of movement of a pointer between icons of different levels. In contrast, in the present invention, the speed of movement of a pointer between icons of the same level is made different from the speed of movement of the pointer between icons of different levels, so that the menu selection time is shortened. That is, the speed of movement of the pointer between icons of different levels is made faster than that of movement of the pointer between icons of the same level, in order to shorten the menu selection time.

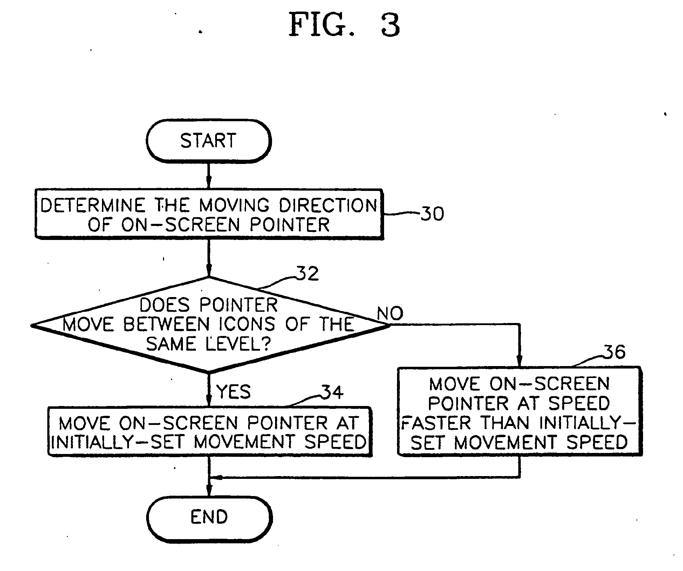

FIG. 3 illustrates an on-screen menu selecting method according to the present invention, particularly, a method of selecting items of an on-screen menu which is represented in multiple levels.

The moving direction of an on-screen menu is determined in step 30, and a determination is made as to whether the on-screen pointer moves between icons of the same level, in step 32. That is, it can be seen from FIG. 2 that the movement of the pointer between the same level is made upward and downward and the movement of the pointer between different levels is made from side to side. The on-screen pointer 21 change coordinates whenever it moves, so that the moving direction of the pointer can be determined by the values of the changed coordinates.

In the case shown in FIG. 2, if the variation of coordinate along the X-axis direction is larger than the variation of coordinate along the Y-axis direction, the movement of the pointer is determined to be movement between icons of different levels. If a variation along the Y-axis direction is larger than that along the X-axis direction, the movement of the pointer is determined to be movement between icons of the same level.

If it is determined in step 32 that the pointer moves between icons of the same level, the on-screen pointer is moved at an initially-set movement speed, in step 34. On the other hand, if it is determined in step 32 that the pointer moves between icons of different levels, the on-screen pointer is moved at a speed faster than the initially-set movement speed, in step 36.

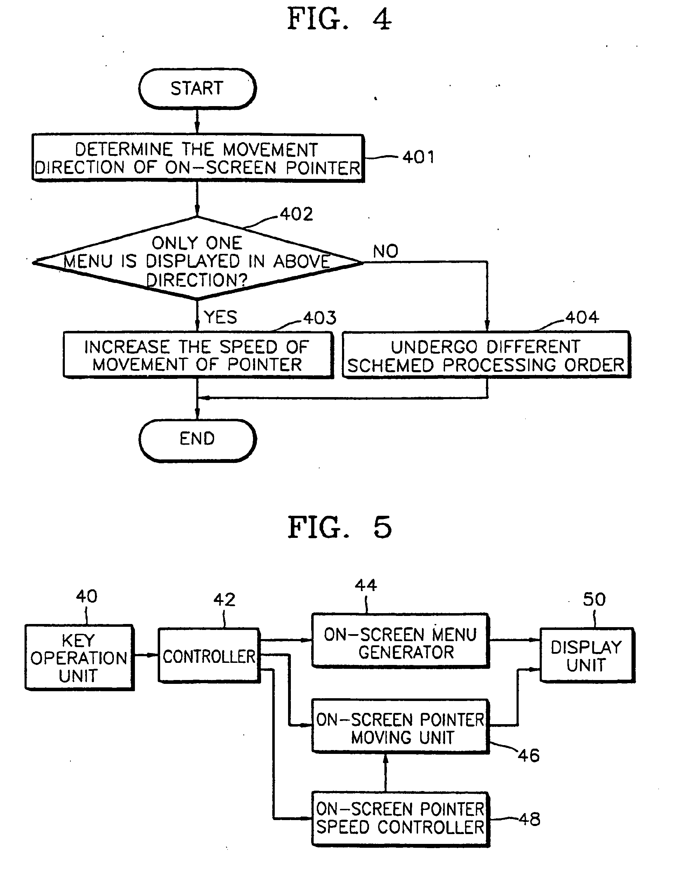

FIG. 4 illustrates another embodiment of an on-screen menu selecting method according to the present invention. An embodiment in the case that a menu is not displayed in multiple levels but a menu screen is one-dimensionally displayed, will now be described.

First, the direction in which an on-screen pointer is to be moved, is determined in step 401. A determination is made as to whether only one menu has been displayed in the direction determined in step 401, in step 402. In steps 401 and 402, how many menus are displayed within a predetermined direction angle (for example, ±60°) is determined on the basis of the current direction of movement of pointer.

If it is determined in step 402 that only one menu is displayed, the pointer is controlled to move faster in the determined movement direction, in step 403. On the other hand, if it is determined in step 402 that two or more menus are displayed, a different schemed processing order is undergone, in step 404. This step 404 will not be described in more detail.

FIG. 5 shows an on-screen menu selecting apparatus according to the present invention. Referring to FIG. 5, the apparatus includes a key operation unit 40, a controller 42, an on-screen menu generator 44, an on-screen pointer moving unit 46, an on-screen pointer speed controller 48, and a display unit 50.

The key operation unit 40 has a remote controller and a key operator of a panel, particularly, has an on-screen pointer movement key for moving an on-screen pointer. The on-screen menu generator 44 generates an on-screen menu under the control of the controller 42 and provides it to the display unit 50. The on-screen pointer moving unit 46 moves the on-screen pointer under the control of the controller 42 so that the on-screen pointer corresponds to the movement of an I-pointer which is an on-screen pointer movement key. The on-screen pointer speed controller 48 controls the on-screen pointer to move between icons of different levels at a speed faster than an initially-set movement speed.

The controller 42 receives a signal from the key operation unit 40 and controls the generation of the on-screen menu and movement of the on-screen pointer. In particular, the movement of the on-screen pointer between icons of different levels is controlled to be faster than the initially-set speed. Also, the controller 42 judges the direction in which the pointer is to be moved, and determines whether only one menu is displayed in the judged direction. If only one menu is determined as being displayed, the pointer is controlled to move fast in the moving direction. That is, the controller 42 determines the direction in which the pointer is to be moved, by calculating a predetermined direction angle on the basis of the coordinate value of a current located pointer.

According to the present invention as described above, the menu selection time is shortened by increasing the speed of movement of an on-screen pointer.

## Claims

1. An on-screen menu selecting method comprising the steps of:
displaying a multi-level menu comprising menus (20, 22) of different levels, each menu having a plurality of menu items represented by corresponding vertically arranged icons (23, 25) that are selectable by a pointer (21), wherein menus of different levels are displayed in different horizontally arranged areas of a screen (50) and wherein the menu of a given level is displayed only after selection of an item of its immediately preceding level;
determining (30, 32, 401, 402) by the values of coordinates changed during the movement of the pointer whether the pointer moves between the icons of menus of different levels or between the icons of one of the menus of different levels, wherein
it is determined that the pointer moves between the icons of menus of different levels, if the change of coordinates during the movement of the pointer in the horizontal direction is larger than the change of coordinates in the vertical direction, and
it is determined that the pointer moves between the icons of one of the menus of different levels, if the change of coordinates during the movement of the pointer in the vertical direction is larger than the change of coordinates in the horizontal direction; and further comprising the step
based on the determination of whether the pointer moves between the icons of menus of different levels or between the icons of one of the menus of different levels controlling the pointer so that a speed of movement of the pointer between the icons of menus of different levels is faster than a speed of movement of the pointer between the icons of one of the menus of different levels, thereby shortening a menu selection time.

2. The method according to claim 1, wherein said icons are displayed on a television screen.

3. A computer readable storage medium for storing instructions to perform the method according to claim 1 or 2.

4. An on-screen menu selecting apparatus for displaying a multi-level menu comprising menus (20, 22) of different levels, each menu having a plurality of menu items represented by corresponding vertically arranged icons (23, 25) displayed in different horizontally arranged areas of a screen (50) and wherein the menu of a given level is displayed only after selection of an item of its immediately preceding level the apparatus comprising:
an on-screen menu generator (44) for generating said on-screen menu;
means for determining (30, 32, 401, 402) by the values of coordinates changed during the movement whether the pointer moves between the icons of menus of different levels or between the icons of one of the menus of different levels such that
it is determined that the pointer moves between the icons of menus of different levels, if the change of coordinates during the movement of the pointer in the horizontal direction is larger than the change of coordinates in the vertical direction, and
it is determined that the pointer moves between the icons of one of the menus of different levels, if the change of coordinates during the movement of the pointer in the vertical direction is larger than the change of coordinates in the horizontal direction; and further comprising
a speed controller (48) for controlling, based on the determination of whether the pointer moves between the icons of menus of different levels or between the icons of one of the menus of different levels, the pointer so that a speed of movement of the pointer between the icons of menus of different levels is faster than a speed of movement of the pointer between the icons of one of the menus of different levels, thereby shortening a menu selection time.

5. The apparatus according to claim 4, further comprising means (40, 42, 46, 48, 50) for displaying and moving the pointer (21) from a start icon to a target icon wherein said means (40, 42, 46, 48, 50) for displaying and moving said pointer includes a remote controller comprising an on-screen pointer movement key (14).

## Patentansprüche

1. Ein On - Screen - Menu - Auswahlverfahren, das die Schritte umfasst:
Anzeigen eines Mehrebenen - Menus, das Menus (20, 22) verschiedener Ebenen umfasst, wobei jedes Menu eine Mehrzahl an Menupunkten aufweist, die durch entsprechende vertikal angeordnete Icons (23, 25) dargestellt werden, die mit einem Zeiger (21) ausgewählt werden können, wobei die Menus verschiedener Ebenen in verschiedenen horizontal angeordneten Gebieten eines Bildschirms (50) angeordnet sind, und wobei das Menu einer bestimmten Ebene nur nach Auswahl eines Punktes seiner direkt vorhergehenden Ebene angezeigt wird;
Bestimmen (30, 32, 401, 402) über die Werte von Koordinaten, die während der Bewegung des Zeigers verändert werden, ob der Zeiger sich zwischen den Icons von Menus verschiedener Ebenen oder zwischen den Icons eines der Menus verschiedener Ebenen bewegt, wobei
bestimmt wird, dass sich der Zeiger zwischen den Icons von Menus verschiedener Ebenen bewegt, wenn die Änderung von Koordinaten während der Bewegung des Zeigers in der horizontalen Richtung größer als die Änderung von Koordinaten in der vertikalen Richtung ist, und
bestimmt wird, dass sich der Zeiger zwischen den Icons eines der Menus verschiedener Ebenen bewegt, wenn die Änderung von Koordinaten während der Bewegung des Zeigers in der vertikalen Richtung größer als die Änderung von Koordinaten in der horizontalen Richtung ist, und weiterhin den Schritt umfassend
Steuern des Zeigers, auf der Grundlage der Bestimmung, ob sich der Zeiger zwischen den Icons von Menus verschiedener Ebenen oder zwischen den Icons eines der Menus verschiedener Ebenen bewegt, so dass eine Geschwindigkeit der Bewegung des Zeigers zwischen den Icons von Menus verschiedener Ebenen größer als eine Geschwindigkeit der Bewegung des Zeigers zwischen den Icons eines der Menus verschiedener Ebenen ist, wodurch eine Menuauswahlzeit verringert wird.

2. Das Verfahren gemäß Anspruch 1, in dem die genannten Icons auf einem Fernsehbildschirm angezeigt werden.

3. Ein computerlesbares Speichermedium zum Speichern von Anweisungen, um das Verfahren gemäß Anspruch 1 oder 2 auszuführen.

4. Eine On - Screen - Menu - Auswahlvorrichtung zum Anzeigen eines Mehrebenen - Menus, das Menus (20, 22) verschiedener Ebenen umfasst, wobei jedes Menu eine Mehrzahl an Menupunkten aufweist, die durch entsprechende vertikal angeordnete Icons (23, 25) dargestellt werden, die in verschiedenen horizontal angeordneten Gebieten eines Bildschirms (50) angeordnet sind, und wobei das Menu einer bestimmten Ebene nur nach Auswahl eines Punktes seiner direkt vorhergehenden Ebene angezeigt wird, wobei die Vorrichtung umfasst:
einen On - Screen - Menu - Generator (44) zum Erzeugen des genannten On - Screen - Menus;
Mittel zum Bestimmen (30, 32, 401, 402) über die Werte von Koordinaten, die während der Bewegung des Zeigers verändert werden, ob der Zeiger sich zwischen den Icons von Menus verschiedener Ebenen oder zwischen den Icons eines der Menus verschiedener Ebenen bewegt; derart dass
bestimmt wird, dass sich der Zeiger zwischen den Icons von Menus verschiedener Ebenen bewegt, wenn die Änderung von Koordinaten während der Bewegung des Zeigers in der horizontalen Richtung größer als die Änderung von Koordinaten in der vertikalen Richtung ist, und
bestimmt wird, dass sich der Zeiger zwischen den Icons eines der Menus verschiedener Ebenen bewegt, wenn die Änderung von Koordinaten während der Bewegung des Zeigers in der vertikalen Richtung größer als die Änderung von Koordinaten in der horizontalen Richtung ist, und weiterhin umfassend
einen Geschwindigkeits - Kontroller (48) zum Steuern des Zeigers, auf der Grundlage der Bestimmung, ob sich der Zeiger zwischen den Icons von Menus verschiedener Ebenen oder zwischen den Icons eines der Menus verschiedener Ebenen bewegt, so dass eine Geschwindigkeit der Bewegung des Zeigers zwischen den Icons von Menus verschiedener Ebenen größer als eine Geschwindigkeit der Bewegung des Zeigers zwischen den Icons eines der Menus verschiedener Ebenen ist, wodurch eine Menuauswahlzeit verringert wird.

5. Die Vorrichtung gemäß Anspruch 4, die weiterhin Mittel (40, 42, 46, 48, 50) zum Anzeigen und Bewegen des Zeigers (21) von einem Start - Icon zu einem Ziel - Icon umfasst, wobei das genannte Mittel (40, 42, 46, 48, 50) zum Anzeigen und Bewegen des genannten Zeigers (21) einen Remote - Kontroller, der eine On - Screen - Zeiger - Bewegungstaste (14) umfasst, einschließt.

## Revendications

1. Procédé de sélection dans un menu affiché sur un écran, comprenant les étapes consistant à :
afficher un menu à plusieurs niveaux comprenant des menus (20, 22) de niveaux différents, chaque menu comportant une pluralité d'éléments de menu représentés par des icônes correspondantes agencées verticalement (23, 25) pouvant être sélectionnées par un pointeur (21), dans lequel des menus de niveaux différents sont affichés dans des zones différentes d'un écran (50) agencées horizontalement, et dans lequel le menu d'un niveau donné est affiché seulement après sélection d'un élément du niveau qui le précède immédiatement ;
déterminer (30, 32, 401, 402) par les valeurs des coordonnées modifiées pendant le mouvement du pointeur, si le pointeur se déplace entre les icônes de menus de niveaux différents ou entre les icônes de l'un des menus de niveaux différents, dans lequel
on détermine que le pointeur se déplace entre les icônes de menus de niveaux différents si la variation des coordonnées pendant le mouvement du pointeur dans la direction horizontale est supérieure à la variation des coordonnées dans la direction verticale, et
on détermine que le pointeur se déplace entre les icônes de l'un des menus de niveaux différents, si la variation des coordonnées pendant le mouvement du pointeur dans la direction verticale est plus grande que la variation des coordonnées dans la direction horizontale ; et comprenant en outre l'étape suivante
en se basant sur la détermination du fait que le pointeur se déplace entre les icônes de menus de niveaux différents ou entre les icônes de l'un des menus de niveaux différents, on commande le pointeur de façon que la vitesse du mouvement du pointeur entre les icônes de menus de niveaux différents soit plus rapide que la vitesse du mouvement du pointeur entre les icônes de l'un des menus de niveaux différents, de façon à raccourcir le temps de sélection de menu.

2. Procédé selon la revendication 1 ou 3, dans lequel lesdites icônes sont affichées sur un écran de télévision.

3. Support d'enregistrement lisible par un ordinateur pour enregistrer des instructions pour exécuter le procédé selon la revendication 1 ou 2.

4. Dispositif de sélection dans un menu affiché sur un écran pour afficher un menu à plusieurs niveaux comprenant des menus (20, 22) de niveaux différents, chaque menu comportant une pluralité d'éléments de menu représentés par des icônes correspondantes agencées verticalement (23, 25) affichées dans des zones différentes d'un écran (50) agencées horizontalement, et dans lequel le menu d'un niveau donné est affiché seulement après sélection d'un élément du niveau qui le précède immédiatement, le dispositif comprenant :
un générateur de menu affiché sur un écran (44) pour générer ledit menu affiché sur un écran ;
un moyen pour déterminer (30, 32, 401, 402) par les valeurs des coordonnées modifiées pendant le mouvement du pointeur, si le pointeur se déplace entre les icônes de menus de niveaux différents ou entre les icônes de l'un des menus de niveaux différents, de telle sorte que
on détermine que le pointeur se déplace entre les icônes de menus de niveaux différents si la variation des coordonnées pendant le mouvement du pointeur dans la direction horizontale est supérieure à la variation des coordonnées dans la direction verticale, et
on détermine que le pointeur se déplace entre les icônes de l'un des menus de niveaux différents, si la variation des coordonnées pendant le mouvement du pointeur dans la direction verticale est plus grande que la variation des coordonnées dans la direction horizontale ; et comprenant en outre
un contrôleur de vitesse (48) pour, en se basant sur la détermination du fait que le pointeur se déplace entre les icônes de menus de niveaux différents ou entre les icônes de l'un des menus de niveaux différents, commander le pointeur de façon que la vitesse du mouvement du pointeur entre les icônes de menus de niveaux différents soit plus rapide que la vitesse du mouvement du pointeur entre les icônes de l'un des menus de niveaux différents, de façon à raccourcir le temps de sélection de menu.

5. Dispositif selon la revendication 4, comprenant en outre un moyen (40, 42, 46, 48, 50) pour afficher et déplacer le pointeur (21) depuis une icône de départ jusqu'à une icône cible, dans lequel ledit moyen (40, 42, 46, 48, 50) pour afficher et déplacer ledit pointeur comporte une télécommande comprenant une touche de mouvement du pointeur sur l'écran (14).
